# DEMANDE DE BREVET EUROPEEN

(11) **EP 0 560 664 A1**
(43) Date de publication de la demande: **15.09.1993**
(21) Numéro de dépôt: 93400595.0
(22) Date de dépôt: 08.03.1993
(51) Int. Cl.: G02F 1/29, G02B 5/18, G02B 3/14

(54) **Plaque de Fresnel à focale variable**

(30) Priorité: 13.03.1992 FR 9203007
(71) Demandeur: THOMSON-CSF, 75008 Paris (FR)
(72) Inventeur: Kormann, René, F-92402 Courbevoie Cedex (FR); Oppenlander, Andréas, F-92402 Courbevoie Cedex (FR)
(74) Mandataire: Guérin, Michel

(57) **Abrégé**

L'invention concerne une plaque de Fresnel à focale variable comportant une succession d'anneaux concentriques absorbants et d'anneaux concentriques transparents permettant de focaliser une lumière incidente de longueur d'onde À. Cette plaque de Fresnel possède des moyens permettant de faire varier l'absorbance et la transparence des anneaux concentriques de manière à reconfigurer ladite plaque et ainsi changer la focale. Selon les domaines spectraux, il peut s'agir d'une plaque de Fresnel utilisant des matériaux électrochromes, des polymères à cristal liquide dispersés ou bien encore des dépôts électrolytiques à base d'argent permettant la focalisation de rayons X.

## Description

L'invention concerne un dispositif de focalisation à focale variable. Il s'agit plus précisément d'une plaque de Fresnel comprenant une succession de zones concentriques absorbantes ou réfléchissantes Si_{A} et des zones transparentes Si_{T}, les dimensions des zones pouvant être commandées de manière à changer la focale de la plaque de Fresnel.

De façon générale, une plaque de Fresnel encore appelée zone de Fresnel est un réseau circulaire constitué d'anneaux concentriques alternativement transparents et opaques et dont l'espacement diminue avec la distance au centre. Les ondes diffractées lorsqu'elles traversent les anneaux transparents, convergent toutes au même point focal. La focale d'une telle zone de Fresnel est définie par la relation suivante : f = R12/Â si λ est la longueur d'onde du faisceau à focaliser et Rᵢ est le rayon du cercle intérieur. Les rayons Rₙ des autres cercles concentriques étant définis par la relation Rₙ = R₁√ n de manière à assurer la convergence de toutes les ondes traversant les zones transparentes en un même point focal F. Les plaques de Fresnel sont particulièrement intéressantes dans les domaines spectraux tels que les rayons X où les plaques de Fresnel ont permis de focaliser les rayons X avec une précision supérieure à celle des instruments d'optique classique augmentant notamment les performances de microscopes à rayons X dont la résolution est supérieure à celle des microscopes optiques.

D'autre part certains autres domaines spectraux tels que l'infrarouge nécessite de mettre au point d'autres dispositifs de focalisation que ceux existant à l'heure actuelle telle que des lentilles à base de ZnS ou de ZnSe. En effet ces matériaux sont transparents dans l'infrarouge mais ne possèdent pas une bonne stabilité chimique et restent à des coûts très élevés.

Enfin dans les longueurs d'ondes visibles pour lesquelles des systèmes à focale variable existent, composés généralement d'ensemble de lentilles déplaçables les unes par rapport aux autres il peut également être intéressant de développer d'autres dispositifs plus monolithiques et moins encombrants.

Dans ce contexte, l'invention propose une plaque de Fresnel à géométrie reconfigurable présentant des zones concentriques Si commandables de manière à régler la position des anneaux transparents et celle des anneaux absorbants. Une telle plaque permet à partir d'un unique dispositif de faire converger successivement un même faisceau incident en différents points.

Plus précisément, l'invention concerne une plaque de Fresnel comprenant une alternance d'anneaux concentriques transparents et d'anneaux concentriques absorbants et/ou réfléchissants, caractérisée en ce que les anneaux concentriques sont eux-mêmes constitués d'anneaux élémentaires Ci dont l'absorption et/ou la réflexion sont commandables, permettant de régler la focalisation d'une lumière de polarisation quelconque sans emploi de polariseur.

La commande peut être effectuée électriquement ou thermiquement.

La plaque de Fresnel selon l'invention peut comprendre un substrat sur lequel sont déposées des électrodes circulaires Ei isolées électriquement les unes des autres, lesdits substrats et électrodes étant transparents à la longueur d'onde du faisceau à focaliser et une couche de matériau M dont l'absorption et la réflexion peuvent être commandées électriquement. Le matériau M peut avantageusement être un électrochrome, il peuts'agirégalementd'un polymère dans lequel sont dispersées des billes contenant des molécules de cristal liquide et des molécules colorantes.

La plaque de Fresnel selon l'invention peut également comprendre un substrat sur lequel sont déposées des électrodes circulaires Ei isolées électriquement les unes des autres et un matériau M' déposé par voie électrolytique sur certains anneaux élémentaires Ci.

Dans le cadre de la focalisation de rayons X, les électrodes Ei peuvent être réalisées à partir de matériau léger tel que l'aluminium, le matériau M' étant plus lourd de manière à absorber et réfléchir les rayons X. En l'occurence ce matériau M' peut être de l'argent.

Parallèlement aux matériaux dont l'absorption peut être influencée électriquement, il existe des matériaux semiconducteurs devenant métalliques au-dessus d'une certaine température de transition Tx. L'oxyde de vanadium V0₂ devient ainsi métallique et réfléchissant au-delà de 72°C. L'intérêt d'un tel matériau est qu'il est d'autre part transparent dans l'infrarouge, il est donc possible de réaliser une plaque de Fresnel selon l'invention, comprenant de l'oxyde de vanadium localement chauffé et capable de faire converger un faisceau incident de longueur d'onde se situant dans l'infrarouge.

L'invention sera mieux comprise et d'autres avantages apparaîtront à la lecture de la description qui va suivre et des figures annexées parmi lesquelles :
- la figure 1 représente une plaque de Fresnel selon l'invention dont une partie des anneaux élémentaires Ci est transparente, l'autre partie des anneaux élémentaires Ci étant absorbante, permettant de définir des zones Si_{T} transparentes et des zones Si_{A} absorbantes ;
- la figure 2 illustre les dimensions des zones Si en fonction de la longueur d'onde λ
   . la figure 2a représente l'évolution des rayons Ri des zones Si en fonction de la longueur d'onde λ du faisceau incident à focaliser ; les différentes courbes correspondant à différentes valeurs de i
   . la figure 2b illustre la différence de rayons Ri+i - Ri en fonction de la longueur d'onde λ, les différentes courbes correspondant à différentes valeurs de i ;

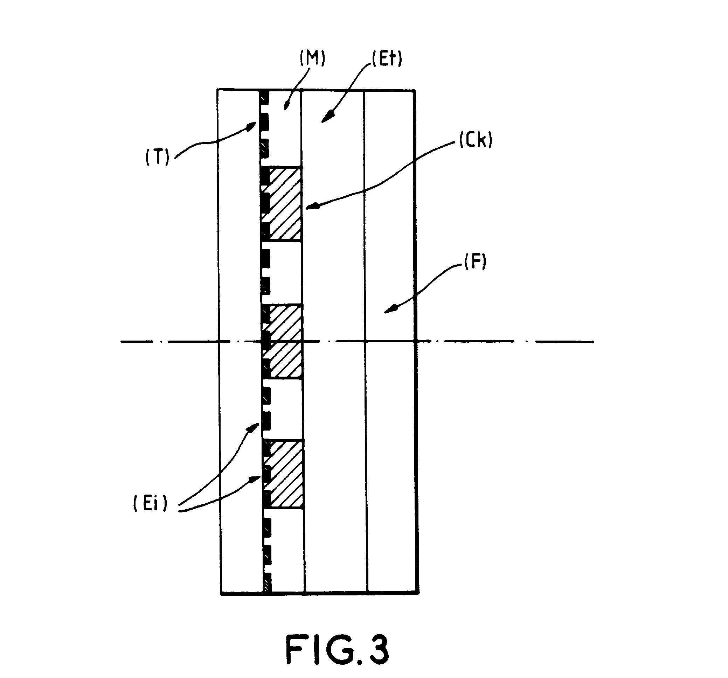

- la figure 3 illustre un exemple de plaque de Fresnel utilisant des électrodes concentriques Ei et un matériau électrochrome ;

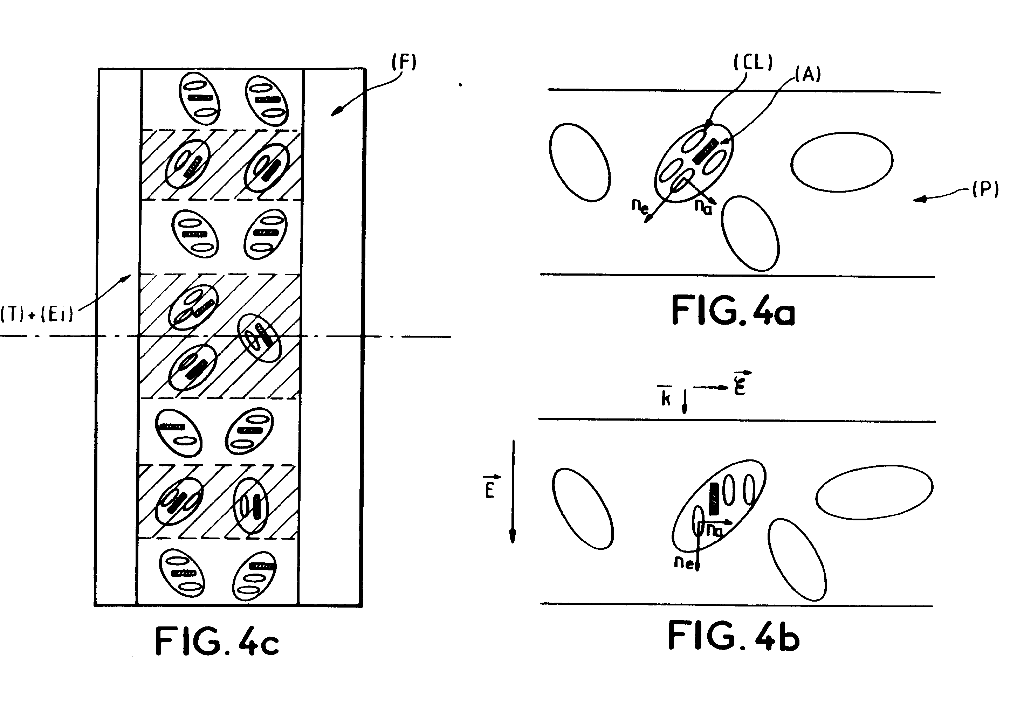

- la figure 4 illustre un exemple de plaque de Fresnel selon l'invention utilisant un matériau polymère à cristal liquide dispersé.

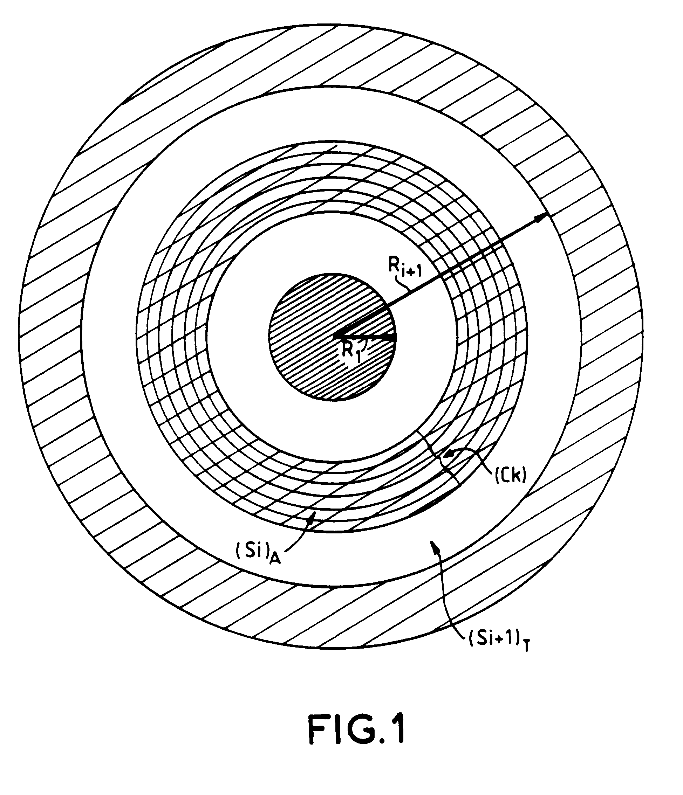

La plaque de Fresnel selon l'invention est schématisée à la figure 1. Elle est constituée de zones concentriques Si_{A} absorbantes et/ou réfléchissantes et de zones S₁1_{1T} transparentes. La plaque est plus précisément constituée par tout un ensemble d'anneaux concentriques Cₖ dont l'état de transparence ou d'absorbance est commandable de manière à pouvoir reconfigurer la structure de ladite plaque pour en faire varier la focale f directement reliée aux rayons Ri des zones Si. L'avantage d'utiliser une série d'anneaux concentriques Ck au sein de chaque zone Siᵣ ou Si+I_{A} est de corriger les points focaux secondaires en modulant spatialement l'absorption (ou la réflectivité) des zones de Fresnel. Typiquement on cherche à obtenir un maximum d'absorption ou de réflectivité pour l'anneau élémentaire central Cₖ, de même on cherche à obtenir une transparence moyenne à la jonction de deux zones Si et Si+1, la transparence devenant maximale pour l'anneau élémentaire se situant au centre d'une zone Si+1.

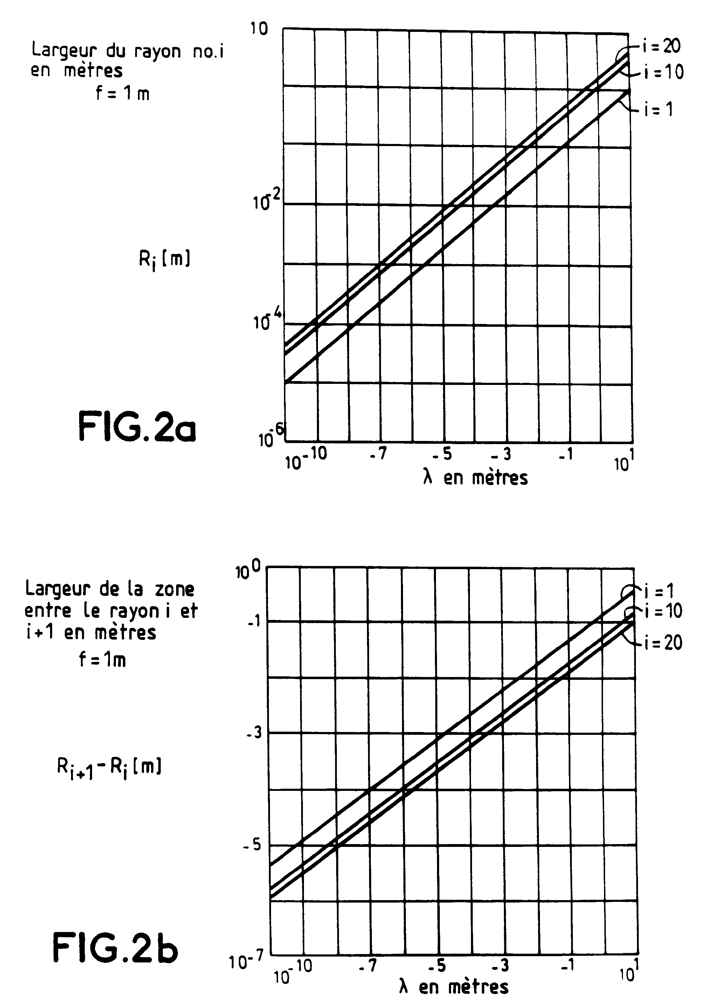

La figure 2 montre à titre indicatif les dimensions des zones Si d'une plaque de Fresnel en fonction de la longueur d'onde λ du faisceau lumineux que l'on cherche à focaliser. Les courbes des figures 2a et 2b mettent en évidence que les dimensions des zones Si et leurs rayons Ri diminuent fortement lorsque la longueur d'onde décroît, en considérant une focale constante et égale à 1 m. La figure 2b explicite la diminution de Ri+1 - Ri lorsque i augmente.

Les exemples suivants proposent des plaques de Fresnel différentes selon la gamme de longueurs d'onde auxquelles on s'intéresse.

### Exemple 1

Cet exemple concerne une plaque de Fresnel fonctionnant dans les longueurs d'ondes visibles et utilisant un matériau M électrochrome. Une telle plaque est illustrée à la figure 3. Sur un substrat transparent T, des électrodes transparentes concentriques Ei sont déposées. Il peut s'agir typiquement de lames de verres recouvertes par des anneaux concentriques d'oxyde d'indium et d'étain. La taille des anneaux concentriques conducteurs est donnée par les figures 2a et 2b. Dans le domaine des longueurs d'ondes visibles (λ compris entre 10-⁷ et 10-⁶cm) Ri est de l'ordre du 0,1 mm et l'on peut envisager une dizaine d'anneaux concentriques Ck au sein d'une même zone. La taille des électrodes Ei peut ainsi être voisine de 10 µm. On utilise des méthodes classiques de connectique permettant d'adresser séparément chaque électrode Ei. La plaque de Fresnel représentée à la figure 3 comprend outre l'ensemble T plus Ei une couche de matériau électrochrome capable de passer d'un état transparent à un état coloré et donc absorbant sous l'action d'un champ électrique. Plus précisément le changement d'état peut s'opérer par insertions simultanée d'électrons et de cations dans le matériau électrochrome, les ions étant fournis par un électrolyte présent dans la cellule. Plus précisément le matériau électrochrome M peut être l'oxyde de tungstène W0₃, capable de passer d'un état transparent à un état coloré par insertion de cations tels que H⁺ ou Li⁺ fournis par une couche d'électrolyte Et. A titre d'exemple une couche de 0,3 µm d'épaisseur d'oxyde de tungstène W0₃ est capable de passer d'une transmission supérieure à 90 % à une transmission inférieure à 10 % lorsque le taux d'insertion est élevé. Parmi les autres oxydes se colorant par insertions de cations on peut citer également les composés V₂0₅ ou bien encore Ti0₂. Les méthodes de réalisation de couches minces de ces oxydes sont les méthodes classiques telles que l'évaporation thermique, la pulvérisation cathodique ou les méthodes sol- gel. L'électrolyte employé Et, en contact avec l'électrochrome, est de préférence un polymère élastomère ou un gel facile à utiliser. Il peut s'agir du polyoxyethy- lène chargé en carbonate de lithium. L'épaisseur de l'électrolyte peut être voisine de plusieurs dizaines de microns. En regard de l'électrolyte on dispose une contre électrode transparente F nécessaire à l'établissement d'un courant dans la cellule électrochrome ainsi élaborée. Lorsque certaines des électrodes Ei sont mises sous tension ainsi que la contre électrode F, le processus de coloration s'opère localement au niveau de l'électrochrome en regard desdites électrodes adressées. Les autres régions de l'électrochrome restent incolores et l'on obtient ainsi une succession d'anneaux concentriques colorés et absorbants et d'anneaux transparents, permettant de réaliser une plaque de Fresnel, selon l'invention.

Lorsque l'on cherche à faire converger une lumière blanche il est avantageux d'utiliser la superposition de plusieurs plaques de Fresnel selon l'invention comprenant des matériaux électrochromes absorbant à des longueurs d'ondes complémentaires. On parvient ainsi à compenser l'aberration chromatique généralement engendrée avec une seule plaque de Fresnel puisque la focale d'une telle plaque varie très fortement avec la longueur d'onde. Plus précisément, dans le domaine visible, on peut empiler trois plaques de Fresnel dont les couches électrochromes n'absorbent qu'une couleur primaire (rouge, vert, bleu) chacune selon le matériau choisi. A priori un tel ensemble présente trois points focaux différents, un pour chaque couleur, néanmoins en ajustant les rayons Ri de chaque plaque, il est possible de faire coïncider ces points focaux, éliminant ainsi l'aberration chromatique.

### Exemple 2

Cet exemple concerne une plaque de Fresnel fonctionnant également dans les longueurs d'ondes visibles et utilisant un matériau polymère dans lequel sont dispersées des billes contenant des molécules de cristal liquide et des molécules de colorant. Un tel matériau présente la particularité d'être capable de passer d'un état absorbant à un état transparent sous l'action d'un champ électrique. Le cristal liquide choisi est de préférence un nématique constitué de particules oblongues s'orientant parallèlement à un axe privilégié. On associe les molécules de cristal liquide CL à des molécules colorantes et donc absorbantes A. L'ensemble des molécules CL et des molécules A peut être intégré à un polymère de manière à réaliser un polymère chargé de microbilles contenant des molécules de cristal liquide et des molécules colorantes. La figure 4a montre le comportement d'un tel matériau en l'absence de champ électrique. La figure 4b illustre le comportement du matériau en présence de champ électrique. La figure 4c représente une plaque de Fresnel selon l'invention utilisant ce type de matériau. En l'absence de champ électrique les molécules cristal liquide et les molécules de colorant sont renfermées dans des billes oblongues distribuées de façon aléatoire au sein du polymère. L'ellipsoïde des indices des molécules cristal liquide et des molécules colorantes ne présente pas de symétrie de révolution et l'on définit classiquement deux indices optiques, l'indice optique ordinaire nₒ dans une direction perpendiculaire au grand axe de la molécule et l'indice extraordinaire ne dans une direction parallèle. Les molécules colorantes sont des molécules dichroïques transparentes lorsqu'un faisceau incident sous une incidence k rencontre le grand axe de la molécule. Les molécules sont colorées et absorbantes lorsque ledit faisceau rencontre le petit axe de la molécule. Ainsi en absence de champ électrique, les billes oblongues distribuées aléatoirement présentent des molécules colorantes insérées entre des molécules de nématiques dans différentes directions, et seuls quelques pourcentages moléculaires de molécules colorantes par rapport aux molécules cristal liquide suffisent à rendre l'ensemble coloré et absorbant. Par contre, lorsqu'un champ électrique est appliqué (figure 4b) les molécules nématiques s'orientent selon la direction du champ électrique, entraînant par la même l'orientation des molécules colorantes, l'ensemble devenant transparent si l'on utilise un polymère transparent dans le visible telles polyvinylalcool ou les résines epoxy.

La figure 4c illustre ainsi une plaque de Fresnel utilisant un film de polymère à cristal liquide dispersé contenant des molécules de colorant. Une possibilité pour réaliser le film de polymère contenant des billes est de mélanger au sein d'un même solvant les particules de cristal liquide, les molécules de colorant et le monomère du polymère concerné, le mélange est ensuite déposé sur le substrat recouvert par les électrodes Ei.

En initiant la polymérisation thermiquement ou par rayonnement ultraviolets, le polymère et l'ensemble cristal-liquide colorant démixtent et conduisent A l'obtention du film.

On dépose alors la contre électrode transparente sur le film afin de pouvoir adresser électriquement certaines zones du polymère à cristal liquide dispersé de façon à rendre ces zones transparentes, les autres zones demeurant absorbantes.

### Exemple 3

Cet exemple concerne la réalisation d'une plaque de Fresnel utilisant un substrat, des électrodes Ei concentriques et un matériau M' déposé par voie électrolytique. Ce type de plaque peut être particulièrement intéressante dans le domaine des rayons X. On utilise pour cela un substrat léger transparent type feuille de polyéthylène, on réalise dessus des électrodes concentriques Ei en un matériau conducteur également léger tel que l'aluminium. Pour protéger les électrodes en Aluminium des ions de l'électrolyte, on peut avantageusement déposer sur l'ensemble substrat plus électrodes une fine couche de titane (300 Angstrôms) puis une fine couche de platine (300 Angstrôms). La couche de titane favorise l'accrochage de la couche de platine, inerte aux ions de l'électrolyte. L'ensemble substrat plus électrode est mis en présence d'un électrolyte pouvant renfermer un sel d'agent permettant de déposer de l'argent au niveau de certaines électrodes Ei. Pour cela on utilise un cadre métallique servant de contre électrode, situé hors du champ de vision de la plaque de Fresnel ainsi constituée, ledit cadre pouvant être déposé sur une autre feuille de polyéthylène. Les électrodes concentriques sur lesquelles ont été déposées de l'argent absorbent les rayons X, les autres électrodes restant transparentes. Par changement d'adressage il est ainsi facilement permis de reconfigurer la plaque de Fresnel de manière à en changer la focale. A titre d'exemple, quelques Volts d'adressage permettent de déposer de l'ordre du micron d'épaisseur d'argent compte tenu de l'absorption spécifique de l'argent, supérieure à 10³ cm²/g pour des rayons X de longueur d'onde voisine de 10-⁹.

### Exemple 4

Cet exemple concerne la réalisation d'une plaque de Fresnel élaborée à partir d'un matériau devenant métallique au-delà d'une température Tx. L'oxyde vanadium V0₂ est particulièrement intéressant dans le domaine des microondes puisqu'il est transparent à des températures inférieures à une température Tx égale à 72°C. On peut utiliser un substrat de bonne conductivité thermique, transparent aux microondes par exemple un substrat de nitrure d'aluminium, sur lequel on dépose une couche d'oxyde V0₂, localement gravé de manière à définir des anneaux élémentaires concentriques isolés thermiquement par de l'air. Ainsi lorsque l'on chauffe suffisamment certains de ces anneaux élémentaires on définit une plaque de Fresnel commandable thermiquement. L'échauffement local peut être réalisé par un laser piloté mécaniquement de manière à chauffer les anneaux d'oxyde de vanadium désirés. L'échauffement est effectué à une température suffisamment supérieure à Tx pour maintenir les anneaux irradiés dans un état conducteur.

## Revendications

1. Plaque de Fresnel comprenant une alternance d'anneaux concentriques transparents et d'anneaux concentriques absorbants et/ou réfléchissants, caractérisée en ce que les anneaux concentriques sont eux-mêmes constitués d'anneaux élémentaires (Ci) dont l'absorption ou la réflexion sont commandables de manière à régler la focalisation d'une lumière de polarisation quelconque sans emploi de polariseur.

2. Plaque de Fresnel selon la revendication 1, caractérisée en ce qu'elle comprend un substrat sur lequel sont déposées des électrodes circulaires (Ei) isolées électriquement les unes des autres, lesdits substrat et électrodes étant transparents à la longueur d'onde (2,) du faisceau à focaliser et une couche de matériau (M) dont l'absorption ou la réflexion peuvent être commandées électriquement.

3. Plaque de Fresnel selon la revendication 2, caractérisée en ce que le matériau (M) est un électrochrome.

4. Plaque de Fresnel selon la revendication 2, caractérisée en ce que le matériau (M) est un polymère dans lequel sont dispersées des billes contenant des molécules de cristal liquide et des molécules colorantes.

5. Ensemble de plaques de Fresnel selon l'une des revendications 3 ou 4, caractérisé en ce qu'il utilise trois plaques de Fresnel dont les matériaux (Mₗ, M₂ et M₃) ont des longueurs d'onde d'absorption différentes et adaptées de manière à corriger l'aberration chromatique et focaliser une lumière blanche.

6. Plaque de Fresnel selon la revendication 1, caractérisée en ce qu'elle comprend un substrat sur lequel sont déposées des électrodes circulaires (Ei) isolées électriquement les unes des autres et un matériau (M') déposé par voie électrolytique sur certains anneaux élémentaires (CI) de manière à réaliser la géométrie de ladite plaque de Fresnel.

7. Plaque de Fresnel selon la revendication 6, caractérisée en ce que les électrodes (Ei) sont en aluminium, le matériau (M') étant de l'argent de façon à réaliser une plaque de Fresnel capable de focaliser des rayons X.

8. Plaque de Fresnel selon la revendication 1, caractérisée en ce qu'elle comprend une couche de matériau (M_{T}) capable de devenir réfléchissant ou absorbant au-delà d'une température (Tₐ) et une couche substrat (S_{T}) présentant de bonnes propriétés de conduction thermique.

9. Plaque de Fresnel selon la revendication 8, caractérisée en ce que le matériau (M_{T}) est l'oxyde de vanadium (V0₂) et que la température (Tₐ) est voisine de 72°C.
